# DEMANDE DE BREVET EUROPEEN

(11) **EP 4 737 032 A1**
(43) Date de publication de la demande: **06.05.2026**
(21) Numéro de dépôt: 25209914.8
(22) Date de dépôt: 20.10.2025
(51) Int. Cl.: B22F 5/10, B22F 10/28, B22F 10/62, B33Y 10/00, B33Y 40/20, B33Y 80/00, B22F 3/11, B22F 3/24, H01F 41/02, B22F 10/66, H01F 1/20

(54) **PROCÉDÉ DE FABRICATION DE PIÈCES FERROMAGNÉTIQUES COMPRENANT UNE SURFACE EN SURPLOMB ET PIÈCE OBTENUE PAR LEDIT PROCÉDÉ**

(30) Priorité: 22.10.2024 FR 2411484
(71) Demandeur: Commissariat à l'Energie Atomique et aux Energies Alternatives, 75015 Paris (FR)
(72) Inventeur: CROSET, Guillaume, 38054 Grenoble cedex 09 (FR); BAFFIE, Thierry, 38054 Grenoble cedex 09 (FR); BONNEFOY, Vincent, 38054 Grenoble cedex 09 (FR)
(74) Mandataire: Ipsilon

(57) **Abrégé**

L'invention concerne un procédé de fabrication d'une pièce ferromagnétique, comprenant les étapes successives suivantes :
a) fabrication additive d'un ensemble intermédiaire (1) en un matériau ferromagnétique comprenant une ébauche (2) de la pièce ferromagnétique et au moins un support (6), l'ébauche comprenant au moins une partie en surplomb (4) supportée par le au moins un support,
b) élimination de chaque support par dissolution chimique.

## Description

### Domaine technique

La présente invention concerne le domaine de fabrication de pièces ferromagnétiques, notamment de pièces ferromagnétiques utilisées dans les machines électriques, par exemple de rotors ou de stators. En particulier, la présente invention a trait à la fabrication additive de pièces ferromagnétiques.

### Technique antérieure

Dans de nombreuses applications mettant en œuvre des pièces ferromagnétiques, il est nécessaire de réduire au maximum les courants de Foucault générés par la présence d'un flux magnétique alternatif circulant dans lesdites pièces ferromagnétiques. En effet, ces courants de Foucault sont à l'origine de pertes magnétiques importantes, en particulier lorsque les pièces ferromagnétiques sont des rotors de moteurs électriques fonctionnant à hautes fréquences de rotation.

C'est pourquoi il est usuel de fabriquer des pièces ferromagnétiques sous forme d'empilement de tôles laminées isolées les unes des autres. De telles pièces ferromagnétiques présentent ainsi des alternances entre des zones ferromagnétiques et des zones électriquement isolantes. Cependant, les procédés de fabrication de telles pièces ferromagnétiques sont limités quant aux formes des pièces ferromagnétiques qu'ils peuvent produire, ils ne sont notamment pas aptes à fabriquer des pièces ferromagnétiques adaptées pour applications à flux magnétique axial.

Il peut donc être préférable d'utiliser des procédés de fabrication additive pour obtenir des pièces ferromagnétiques complexes, mais ces procédés ne sont pas encore adaptés pour la fabrication de pièces ferromagnétiques sous forme d'empilement de couches ferromagnétiques alternées avec des couches électriquement isolantes.

Afin de réduire les courants de Foucault dans les pièces ferromagnétiques obtenues par fabrication additive, il est connu de fabriquer des pièces ferromagnétiques sous la forme de parois minces séparées par des zones d'air isolantes.

Par exemple, le brevet US 11,155,903 B2 décrit un procédé de fabrication additive d'une pièce ferromagnétique comprenant une paroi fine continue. Le brevet US 11,682,932 A2 décrit un procédé de fabrication additive d'une pièce ferromagnétique comprenant des poches d'air espacées les unes des autres afin de réduire les courants de Foucault.

L'article de Alexander D. Goodall et al. : « Loss performance of an additively manufactured axial flux machine stator with an eddy-current limiting structure », Materials Today Communications, Volume 35, 2023, 105978, décrit une pièce ferromagnétique formant un stator obtenue par fabrication additive et comprenant des zones d'air isolantes.

L'article de C. Klein et al. : « Magnetic Performance of Eddy Current Suppressing Structures in Additive Manufacturing », Actuators 2024, 13(3), 94, simule des pièces ferromagnétiques sous la forme d'une paroi continue suivant le motif formé par une courbe de remplissage de l'espace.

Bien que de telles pièces ferromagnétiques soient théoriquement performantes car elles réduisent les pertes générées par les courants de Foucault, elles sont difficiles à obtenir par fabrication additive. En effet, lesdites pièces ferromagnétiques présentent des parties en surplomb qui peuvent se déformer voire s'effondrer durant leur fabrication additive.

La demande de brevet EP 3 654 501 A1 décrit un procédé de fabrication additive d'une pièce ferromagnétique comprenant un empilement de strates séparées les unes des autres par des zones d'air isolantes, les strates étant supportées les unes aux autres par des supports agencés dans les zones d'air. Toutefois, les supports entre les strates forment des connections électriques entre lesdites strates qui permettent le passage des courants de Foucault et donc ne permettent pas une réduction satisfaisante des pertes engendrées par ces courants de Foucault.

Il existe donc un besoin pour un procédé de fabrication additive adapté pour fabriquer facilement des pièces ferromagnétiques présentant de faibles pertes générées par courants de Foucault.

Le but de l'invention est de répondre, au moins en partie, à ce(s) besoin(s).

### Exposé de l'invention

Pour ce faire, l'invention concerne un procédé de fabrication d'une pièce ferromagnétique, le procédé comprenant les étapes successives suivantes :
a) fabrication additive d'un ensemble intermédiaire en un matériau ferromagnétique comprenant une ébauche de la pièce ferromagnétique et au moins un support, l'ébauche comprenant au moins une partie en surplomb supportée par au moins un support,
b) élimination de chaque support par dissolution chimique.

Par « une partie en surplomb », on entend ici et dans le cadre de l'invention une partie présentant une surface inférieure formant avec la direction de la force gravitationnelle un angle compris entre 45 et 90°, lors de la fabrication additive.

A contrario, « une partie en aplomb » est une partie qui n'est pas en surplomb, c'est-à-dire qui est exempte de surface inférieure formant avec la direction de la force gravitationnelle un angle compris entre 45 et 90°, lors de la fabrication additive. De préférence, la fabrication additive est réalisée en suivant une direction de fabrication sensiblement parallèle à la direction de la force gravitationnelle.

Selon une première variante, l'ébauche peut comprendre une paroi monolithique formant la ou les parties en surplomb, la paroi ayant la forme d'une grille, lorsqu'observée selon une coupe transversale de l'ensemble intermédiaire, la grille étant constituée d'une ligne principale et d'une pluralité de lignes secondaires, chaque ligne secondaire étant une ramification de la ligne principale s'étendant en vis-à-vis d'une autre ligne secondaire, les lignes secondaires étant éloignées les unes des autres de sorte que, pour chaque ligne secondaire, la partie de la paroi suivant ladite ligne secondaire est espacée des parties de la paroi suivant les autres lignes secondaires. De préférence, pour chaque ligne secondaire, la partie de la paroi suivant ladite ligne secondaire est distante de moins de 250 µm de la partie de la paroi suivant la ligne secondaire adjacente en vis-à-vis de ladite ligne secondaire. L'ébauche peut être constituée de la paroi monolithique.

Selon une deuxième variante, l'ébauche peut comprendre une paroi monolithique formant la ou les parties en surplomb, la paroi ayant une forme repliée sur elle-même de sorte que la paroi suit une ligne continue, lorsqu'observée selon une coupe transversale de l'ensemble intermédiaire, chaque surface de la paroi en vis-à-vis d'une autre surface de la paroi étant espacée de ladite autre surface. De préférence, la distance entre lesdites surfaces est inférieure à 250 µm. De préférence, la ligne continue est une courbe de remplissage de l'espace d'ordre supérieur ou égal à 2. De préférence, la courbe de remplissage de l'espace est une courbe de Peano ou une courbe de Hilbert. L'ébauche peut être constituée de la paroi monolithique.

De préférence, la différence entre l'épaisseur de la paroi à l'issue de l'étape a) et l'épaisseur de la paroi à l'issue de l'étape b) est comprise entre 50 et 150 µm, notamment entre 50 et 75 µm ou entre 100 et 150 µm.

De préférence, la paroi a une épaisseur comprise entre 110 et 2000 µm à l'issue de l'étape a).

De préférence, la partie en surplomb est supportée par une pluralité de supports espacés les uns des autres. De préférence, la distance entre deux supports adjacents est comprise entre 100 et 5000 µm.

De préférence, le support a, à l'issue de l'étape a), une forme cylindrique, de préférence de diamètre compris entre 50 et 200 µm, ou la forme d'un parallélépipède allongé, de préférence d'épaisseur comprise entre 50 et 200 µm et/ou de longueur comprise entre 500 et 10000 µm.

De préférence, le support présente, à l'issue de l'étape a), une hauteur, mesurée selon la direction de la force gravitationnelle durant l'étape a), comprise entre 100 et 500 µm.

De préférence, le matériau ferromagnétique est du fer ou un alliage comprenant du fer et au moins un élément choisi parmi le silicium, le cobalt et le nickel.

De préférence, l'ensemble intermédiaire a une forme générale torique ou parallélépipédique.

De préférence, la fabrication additive de l'étape a) met en œuvre une méthode de fusion sur lit de poudre, par exemple de fusion par laser ou par faisceau d'électrons sur lit de poudre, ou une méthode de dépôt de matière sous énergie concentrée, en particulier le dépôt de matière fondue par laser.

De préférence, l'étape b) comprend une sous-étape b₁) d'immersion de l'ensemble intermédiaire dans un bain d'agent dissolvant et/ou de mise en circulation d'un agent dissolvant dans des interstices compris par l'ensemble intermédiaire. De préférence, la sous-étape b₁) dure entre 0,5 et 5 min. De préférence, le bain et/ou l'agent dissolvant mis en circulation est à une température comprise entre 20 et 100 °C. De préférence, le débit de circulation de l'agent dissolvant dans lesdits interstices est compris entre 0,1 et 10 mL/min.

De préférence, l'agent dissolvant du bain et/ou de la mise en circulation comprend un acide choisi parmi l'acide nitrique, l'acide chlorhydrique ou l'acide sulfurique. De préférence, l'agent dissolvant comprend un solvant choisi parmi l'alcool éthylique ou l'eau. De préférence, l'acide représente entre 1 et 5 % en volume de l'agent dissolvant.

De préférence, l'étape b) comprend une sous-étape b₂), ultérieure à la sous-étape b₁), de rinçage de l'ébauche, de préférence par immersion dans une eau désionisée et/ou par mise en circulation d'une eau désionisée dans les interstices de l'ensemble intermédiaire. De préférence, l'eau désionisée est à une température comprise entre 10 et 30 °C. De préférence, la sous-étape b₂) dure entre 5 et 30 min.

De préférence, l'étape b) comprend une sous-étape b₃), ultérieure à la sous-étape b₂), de séchage de l'ébauche, de préférence l'ébauche étant suspendue, de préférence l'ébauche étant mise en rotation sur elle-même à intervalle régulier. De préférence, la sous-étape b₃) dure au moins 1 h.

De préférence, l'étape b) est suivie d'une étape c) d'usinage mécanique des surfaces externes de l'ébauche. L'usinage mécanique permet d'atteindre les côtes visées pour la pièce fabriquée, lorsqu'elles ne sont pas atteintes à la fin de l'étape b), et d'avoir un meilleur état de surface. L'usinage mécanique est notamment avantageux lorsque la sous-étape b₁) comprend la mise en circulation de l'agent dissolvant et est exempte de l'immersion de l'ensemble intermédiaire dans le bain d'agent dissolvant.

L'invention concerne également une pièce ferromagnétique obtenue à partir du procédé selon la présente invention.

La présente invention consiste donc essentiellement en un procédé de fabrication additive adapté à fabriquer des pièces ferromagnétiques ayant au moins une partie en surplomb.

Le procédé est simple à mettre en œuvre car la partie en surplomb est supportée par au moins un support, durant sa fabrication additive, ce qui garantit qu'elle ne se déforme pas et ne s'effondre pas. Par exemple, dans le cas d'une fabrication additive par fusion laser sur lit de poudre, la présence du ou des supports empêche que l'étalement d'une couche de poudre sur la portion déjà construite de la partie en surplomb vienne déformer voire effondrer ladite portion déjà construite. Ainsi, le procédé selon la présente invention est adapté à fabriquer facilement des pièces ferromagnétiques de forme complexe.

En outre, la pièce ferromagnétique obtenue par le procédé selon la présente invention est exempte de support maintenant la ou les parties en surplomb de ladite pièce ferromagnétique, puisque chaque support est éliminé. L'absence de support limite les pertes causées par des courants de Foucault. Les inventeurs ont simulé les pertes massiques lors de l'application d'un champ magnétique alternatif à 500 Hz et 0,5 T sur une pièce ferromagnétique obtenue selon le procédé de la présente invention et sur l'ensemble intermédiaire pour l'obtention de ladite pièce avant l'élimination des supports. Les inventeurs ont mesuré une réduction de 70 % des pertes massiques pour la pièce ferromagnétique obtenue selon le procédé de la présente invention comparée à l'ensemble intermédiaire.

De plus, l'utilisation d'une dissolution chimique dans le procédé selon la présente invention permet d'éliminer facilement chaque support. Notamment, cela permet d'éliminer un ou des supports agencés dans un espace exigu au sein de l'ensemble intermédiaire et qui ne seraient pas accessibles pour une élimination par usinage mécanique. Le ou les supports peuvent être agencés entre deux surfaces de l'ébauche en vis-à-vis l'une de l'autre. Le procédé selon la présente invention n'est ainsi pas limité quant à l'emplacement de chaque support ce qui le rend adapté à fabriquer des pièces ferromagnétiques de forme complexe.

L'utilisation d'une dissolution chimique pour l'élimination de chaque support dans le procédé selon la présente invention a également pour avantage de limiter la rugosité des surfaces de la pièce ferromagnétique fabriquée et donc le risque de contact électrique non désiré pouvant naître entre deux surfaces de ladite pièce ferromagnétique. En particulier, la diminution de la rugosité des surfaces de la pièce ferromagnétique réduit le risque de formation d'arc électrique entre deux surfaces de ladite pièce en vis-à-vis.

La pièce ferromagnétique fabriquée à partir du procédé selon la présente invention peut être utilisée dans un circuit magnétique soumis à un champ magnétique alternatif. Par exemple, ladite pièce ferromagnétique peut être un composant d'un moteur électrique, comme un rotor ou un stator, elle peut également être un composant d'un actionneur ou d'une machine électrique à flux axial.

### Brève description des dessins

D'autres avantages et caractéristiques ressortiront mieux à la lecture de la description détaillée, faite à titre illustratif et non limitatif, en référence aux figures suivantes :
[Fig 1] la figure 1 représente schématiquement en schéma blocs les différentes étapes du procédé selon la présente invention.
[Fig 2] la figure 2 est une vue en perspective de l'ensemble intermédiaire obtenu à l'issue de l'étape a) du procédé selon la présente invention.
[Fig 3] la figure 3 est une vue en perspective de l'ensemble intermédiaire de la figure 2 coupé transversalement.
[Fig 4] la figure 4 est une représentation schématique d'une section transversale d'une première portion de l'ensemble intermédiaire de la figure 3, la première portion comprenant des supports.
[Fig 5] la figure 5 est une représentation schématique d'une section transversale d'une deuxième portion de l'ensemble intermédiaire de la figure 3, la deuxième portion étant exempte de supports.
[Fig 6] la figure 6 est une représentation schématique en coupe transversale d'une extrémité de la paroi continue de l'ébauche après l'étape b) du procédé selon la présente invention.
[Fig 7] la figure 7 est une représentation schématique d'une section transversale d'un autre exemple d'ensemble intermédiaire à l'issue de l'étape a) du procédé selon la présente invention.

### Description détaillée

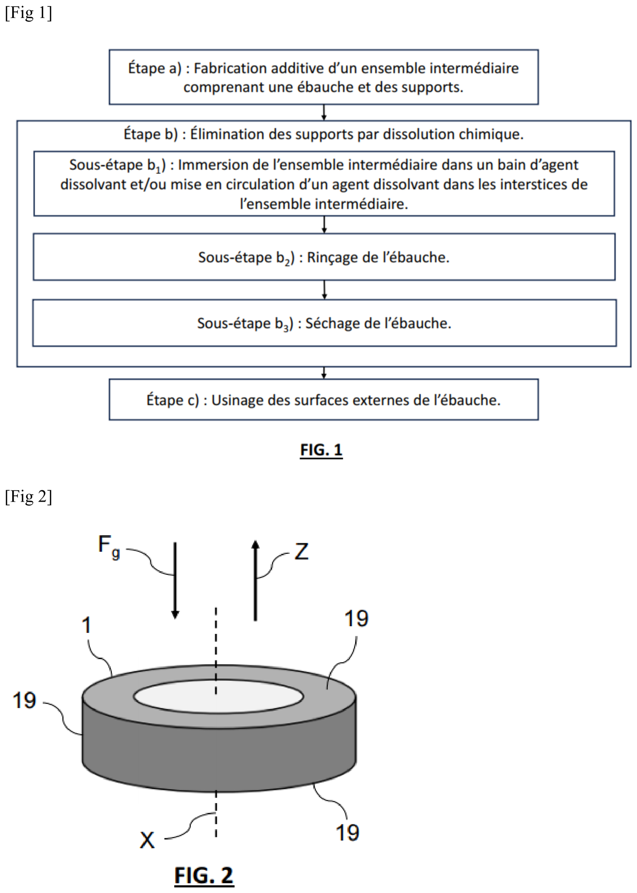

La figure 1 illustre schématiquement les différentes étapes a), b) et c) d'un exemple de procédé de fabrication d'une pièce ferromagnétique selon la présente invention.

L'étape a) consiste à fabriquer un ensemble intermédiaire par fabrication additive. L'ensemble intermédiaire est en un matériau ferromagnétique. Le matériau ferromagnétique peut être amorphe ou cristallin. Le matériau ferromagnétique peut être du fer ou un alliage comprenant du fer et au moins un élément choisi parmi le silicium, le cobalt et le nickel. La méthode de fabrication additive est choisie parmi la fusion sur lit de poudre, notamment la fusion par laser sur lit de poudre ou la fusion par faisceau d'électrons sur lit de poudre, et le dépôt de matière sous énergie concentrée, notamment le dépôt de matière fondue par laser.

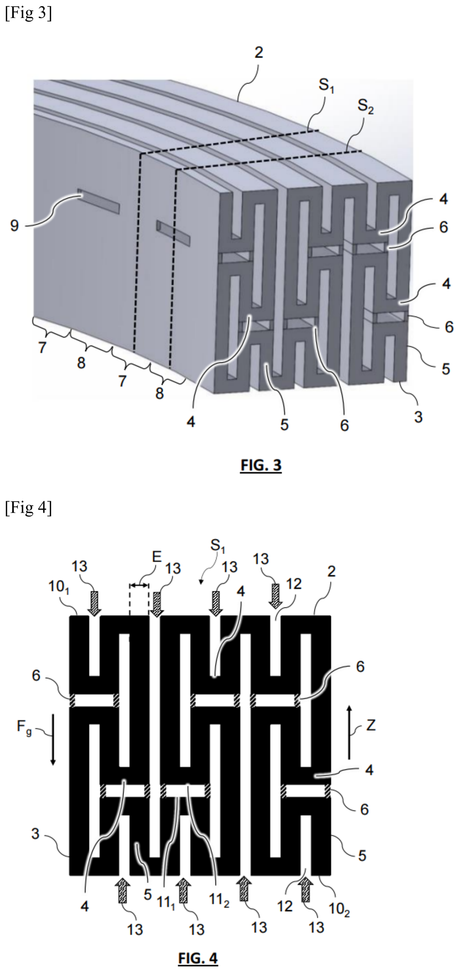

On a illustré aux figures 2 et 3 un exemple d'ensemble intermédiaire 1 telle qu'obtenu à l'issue de l'étape a). Dans l'exemple illustré ici, l'ensemble intermédiaire 1 a une forme générale torique à section rectangle, notamment à section carrée. D'autres formes générales sont bien évidemment envisageables, notamment une forme générale parallélépipédique.

L'ensemble intermédiaire 1 comprend une ébauche 2 de la pièce à fabriquer. L'ébauche 2 comprend une paroi continue 3 présentant une forme repliée sur elle-même de sorte à former des parties en surplomb 4 et des parties en aplomb 5 comprises par l'ébauche 2.

Selon la définition donnée précédemment, les parties en surplomb 4 et les parties en aplomb 5 sont définies en fonction de la direction de la force gravitationnelle F_{g} lors de la fabrication additive de l'ensemble intermédiaire 1. Dans le mode de réalisation illustré aux figures 2 et 3, la force gravitationnelle F_{g} était parallèle à l'axe de révolution X de la forme torique de l'ensemble intermédiaire 1. La fabrication additive a été réalisée selon une direction de fabrication Z parallèle à la direction de la force gravitationnelle F_{g} et de sens opposé.

L'ensemble intermédiaire 1 comprend également une pluralité de supports 6 pour soutenir les parties en surplomb 4. Les supports 6 relient les parties en surplomb 4 aux parties en aplomb 5 et transmettent ainsi le poids des parties en surplomb 4 aux parties en aplomb 5 lors de l'étape a) de fabrication additive de l'ensemble intermédiaire 1.

L'ensemble intermédiaire 1 est monolithique. L'ébauche 2 et les supports 6 sont formés du même matériau ferromagnétique. Les paramètres de mise en œuvre de la méthode de fabrication additive pour les supports 6 peuvent être différents de ceux pour l'ébauche 2. En particulier, lesdits paramètres pour les supports 6 peuvent être choisis de sorte à favoriser la dissolution chimique des supports 6 comparément à l'ébauche 2.

Comme cela est illustré à la figure 3, les supports 6 sont répartis de manière dispersée dans l'ensemble intermédiaire 1 afin de faciliter leur élimination par la suite. L'ensemble intermédiaire 1 comprend des premières portions 7 comprenant les supports 6 et des deuxièmes portions 8 exemptes de supports 6, les premières portions 7 étant alternées avec les deuxièmes portions 8.

Les deuxièmes portions 8 comprennent ainsi des ouvertures 9 en lieu et place des supports 6 dans les premières portions 7. Comme cela est illustré à la figure 3, les supports 6 ont la forme d'un parallélépipède allongé, c'est-à-dire d'un « *mur* ». Alternativement, les supports 6 peuvent avoir une forme cylindrique, c'est-à-dire que les supports 6 peuvent former des colonnes, éloignées les unes des autres.

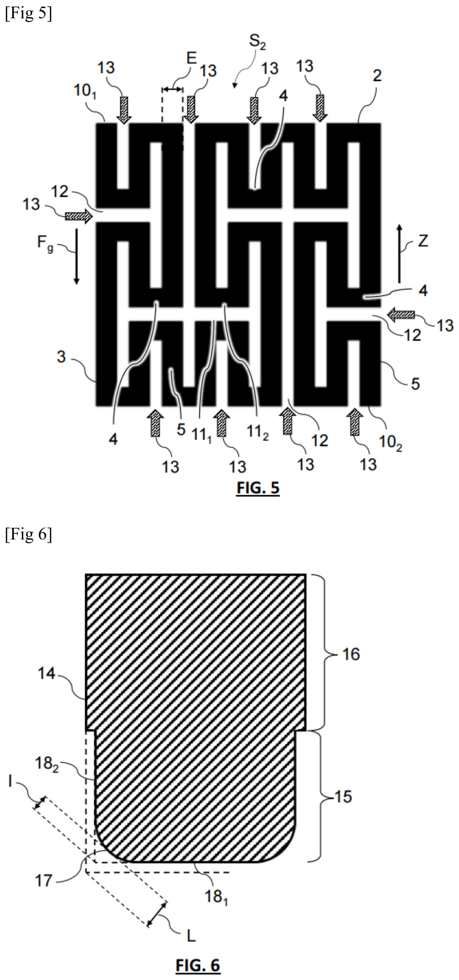

On a illustré à la figure 4 une section S₁ d'une première portion 7 et à la figure 5 une section S₂ d'une deuxième portion 8.

Comme cela est observé aux figures 4 et 5, la paroi 3 présente une forme repliée sur elle-même en suivant une ligne continue, lorsqu'observée selon une coupe transversale de l'ensemble intermédiaire 1. La ligne continue comprend deux extrémités 10₁ et 10₂ qui sont distantes l'une de l'autre. La ligne continue est donc une ligne ouverte. La ligne continue n'est pas auto-intersécante.

La ligne continue s'étend dans l'ensemble de la section de l'ensemble intermédiaire 1 de sorte que la paroi 3 couvre au maximum l'ensemble de ladite section en étant exempte de points de passage. Par *« exempte de points de passage »,* il faut comprendre que chaque surface 11₁ de la paroi 3 en vis-à-vis d'une autre surface 11₂ de la paroi 3 est espacée de ladite autre surface 11₂.

Notamment, la ligne continue est une courbe de remplissage de l'espace d'ordre supérieur à 2. Dans le mode de réalisation illustré aux figures 2 à 5, la ligne continue est une courbe de Peano d'ordre 2.

La paroi 3 est de même épaisseur E sur l'ensemble de son parcours le long de la ligne continue.

Comme cela est illustré aux figures 3 et 4, les supports 6 sont agencés le long des arrêtes des parties en surplomb 4. D'autres positionnements des supports 6 sont tout à fait envisageables tant que ceux-ci supportent les parties en surplomb 4.

Dans un mode de réalisation, les deuxièmes portions 8 peuvent également comprendre des supports 6 agencés en quinconce par rapport aux supports 6 compris par les premières portions 7.

L'ébauche 2 est sensiblement identique à la pièce à fabriquer, c'est-à-dire que l'ébauche 2 ne diffère de celle de la pièce à fabriquer qu'en ce que la paroi 3 de l'ébauche 2 est légèrement plus épaisse que la paroi de la pièce à fabriquer et en ce que les surfaces externes de l'ébauche 2 pourront être usinées afin d'obtenir la pièce à fabriquer aux dimensions visées.

L'étape a) est suivie d'une étape b) durant laquelle les supports 6 sont éliminés par dissolution chimique. L'élimination des supports 6 permet de supprimer les contacts électriques entre différentes portions de la paroi 3 le long de la ligne continue. Ainsi, en éliminant les supports 6, on augmente la longueur effective de parcours du courant électrique dans la pièce ferromagnétique qui sera fabriquée et donc on augmente la résistance électrique qui sera vue par ce courant.

L'étape b) comprend la sous-étape b₁) durant laquelle l'ensemble intermédiaire 1 est plongé dans un bain d'agent dissolvant et/ou durant laquelle un agent dissolvant est mis en circulation dans l'ensemble intermédiaire à travers les interstices 12 de la paroi 3. La mise en circulation de l'agent dissolvant dans les interstices 12 est symbolisée par les flèches 13 sur les figures 4 et 5. Les interstices 12 sont formés par les espaces entre les surface 11₁ et 11₂ en vis-à-vis de la paroi 3.

La mise en circulation de l'agent dissolvant dans les interstices 12 de l'ensemble intermédiaire 1 permet d'éliminer les gaz formés par la dissolution chimique, notamment par la réaction d'oxydo-réduction de ladite dissolution chimique. En outre, la mise en circulation de l'agent dissolvant permet de contrôler l'effet exothermique causé par la dissolution chimique.

L'ensemble intermédiaire 1 peut être mis en rotation sur lui-même à intervalle régulier durant son immersion dans le bain.

L'ensemble intermédiaire 1 peut être suspendu, notamment au-dessus d'un récipient ou du bain, durant la mise en circulation de l'agent dissolvant.

L'immersion de l'ensemble intermédiaire 1 dans le bain et la mise en circulation de l'agent dissolvant peuvent être effectuées successivement. Notamment, la mise en circulation de l'agent dissolvant peut être effectuée préalablement à l'immersion de l'ensemble intermédiaire 1 dans le bain.

L'agent dissolvant du bain et/ou l'agent dissolvant mis en circulation peut être une solution comprenant entre 1 et 5 % en volume d'acide nitrique HNO₃ dans un solvant à base d'alcool éthylique.

Le cas échéant, la mise en circulation peut être réalisée au moyen d'une pompe connectée à des conduits, par exemple des tuyaux en plastique, débouchant dans les interstices 12. Un masque résistant à l'agent dissolvant, par exemple du scotch protecteur, peut être disposé de sorte à obstruer l'espace entre les conduits et la paroi 3. En particulier, ledit masque est déposé de sorte à obstruer les interstices 12, puis des ouvertures sont réalisées dans ledit masque et les conduits sont insérés dans lesdites ouvertures. En plus, d'obstruer l'espace entre les conduits et la paroi 3, le masque permet également de fixer mécaniquement les conduits à l'ensemble intermédiaire 1.

Le débit de circulation de l'agent dissolvant dans les interstices 12 de l'ensemble intermédiaire 1 est aux alentours de 1 mL/min. Ainsi, pour un ensemble intermédiaire dans lequel l'interstice 12 le plus grand présente un volume de 0,5 mL, le temps de résidence de l'agent dissolvant dans l'ensemble intermédiaire 1 est inférieur à 30 s.

L'agent dissolvant du bain peut avoir une température comprise entre 20°C et 100 °C, par exemple égale à 50 °C. L'agent dissolvant mis en circulation dans les interstices 12 de l'ensemble intermédiaire 1 peut avoir une température comprise entre 20°C et 100 °C, par exemple égale à 50 °C, la température pouvant être contrôlée par un thermostat.

Alternativement, l'agent dissolvant du bain et/ou l'agent dissolvant mis en circulation peut être en phase vapeur, notamment issue de l'évaporation d'une solution comprenant entre 1 et 5 % en volume d'acide nitrique HNO₃ dans un solvant à base d'alcool éthylique. Par exemple, l'ensemble intermédiaire 1 peut être logé dans une première chambre sous vide durant l'étape b₁), la première chambre étant connectée fluidiquement à une deuxième chambre dans laquelle la solution est chauffée. Dans un premier temps, la connexion fluidique entre la deuxième chambre et la première chambre peut être fermée, puis dans un second temps, la solution contenue dans la deuxième chambre étant évaporée, ladite connexion fluidique est ouverte. Une vanne peut être utilisée pour ouvrir et fermer ladite connexion fluidique.

La vitesse d'enlèvement de matière par dissolution chimique dépend principalement de l'agent dissolvant et de sa température. Par exemple, pour une solution à 50 °C, comprenant entre 1 et 5 % en volume d'acide nitrique HNO₃ dans un solvant à base d'alcool éthylique, agissant comme agent dissolvant, la vitesse d'enlèvement de matière est comprise entre 30 et 50 µm/min.

Ainsi, pour un tel agent dissolvant et dans le cas où l'on souhaite retirer entre 50 et 75 µm de matière, c'est-à-dire que la distance entre une surface de l'ensemble intermédiaire 1 avant dissolution chimique et la même surface après dissolution chimique est comprise entre 50 et 75 µm, il faut que la sous-étape b₁) dure entre 1 et 2,5 min. Bien évidemment, d'autres durées peuvent être envisagées pour la sous-étape b₁) en fonction de l'agent dissolvant utilisé, de sa température, et de la quantité de matière que l'on souhaite retirer.

Puisque les supports 6 présentent deux surfaces, opposées entre elles, exposées à l'agent dissolvant durant la sous-étape b₁), alors un retrait de matière compris entre 50 et 75 µm est suffisant pour éliminer des supports 6 d'épaisseur comprise entre 100 et 150 µm.

Ainsi, la dissolution chimique de l'étape b) entraîne une perte d'épaisseur de la paroi 3 de l'ébauche 2. Par exemple, la différence entre l'épaisseur de la paroi à l'issue de l'étape a) et l'épaisseur de la paroi à l'issue de l'étape b) est comprise entre 50 et 150 µm, notamment entre 50 et 75 µm lorsque la paroi n'est attaquée que d'un côté et entre 100 et 150 µm lorsque la paroi est attaquée des deux côtés. C'est pourquoi, la paroi 3 de l'ébauche 2 présente à l'issue de l'étape a) une épaisseur E supérieure à l'épaisseur souhaitée pour la pièce ferromagnétique, la différence entre lesdites épaisseurs étant fonction de la quantité de matière qui sera retirée par la dissolution chimique.

Par ailleurs, la dissolution chimique de l'étape b) affecte également la rugosité de la paroi 3 de l'ébauche 2. Notamment, la rugosité de la paroi 3 à l'issue de l'étape b) est inférieure à la rugosité de la paroi 3 avant l'étape b). Pour une sous-étape b₁) selon l'exemple décrit précédemment, les inventeurs ont mesuré qu'une paroi 3 de l'ébauche 2, présentant une rugosité comprise entre 10 et 15 µm avant l'étape b), présente alors une rugosité comprise entre 6 et 11 µm après l'étape b).

De plus, la dissolution chimique de l'étape b) cause également un arrondissement des arêtes de la paroi 3 de l'ébauche 2. On a illustré à la figure 6 le résultat d'un tel arrondissement pour un corps 14 dont la partie inférieure 15 a subi une dissolution chimique selon ce qui précède et la partie supérieure 16 n'a pas subi une telle dissolution chimique.

Les arêtes 17 de la partie inférieure 15 ont été arrondies à la suite de la dissolution chimique. Cet arrondissement peut être caractérisé par un coefficient d'arrondissement égal au rapport *I*/*L,* dans lequel *I* correspond à la distance entre l'arête 17 après dissolution chimique et l'intersection entre les plans contenant les faces 18₁ et 18₂ formant ladite arête 17 après dissolution chimique, et *L* correspond à la distance entre l'arête 17 après dissolution chimique et la même arête 17 avant dissolution chimique.

Pour une sous-étape b₁) selon l'exemple décrit précédemment, les inventeurs ont mesuré un coefficient d'arrondissement d'environ 20%.

La sous-étape b₁) est suivie d'une sous-étape b₂) durant laquelle l'ensemble intermédiaire 1 qui est désormais exempt de support 6 est rincé. Ainsi, la sous-étape b₂) correspond au rinçage de l'ébauche 2. Le rinçage est réalisé avec de l'eau désionisée à température ambiante.

De préférence, le rinçage de l'ébauche 2 comprend l'immersion dans l'eau désionisée et/ou la mise en circulation de l'eau désionisée dans les interstices 12 de l'ébauche 2. L'immersion dans l'eau désionisée et la mise en circulation de l'eau désionisée peuvent être effectuées simultanément ou successivement. La mise en circulation peut être réalisée en utilisant une pompe connectée à des conduits de manière similaire à la mise en circulation de la sous-étape b₁).

Le rinçage est réalisé immédiatement après la sous-étape b₁) afin de stopper le plus rapidement possible la réaction de dissolution chimique.

Le rinçage dure entre 5 et 30 min, par exemple 15 min.

La sous-étape b₂) est suivie d'une sous-étape b₃) durant laquelle l'ébauche 2 est séchée. Durant le séchage de l'ébauche 2, cette dernière est suspendue et effectue une rotation d'un quart de tour sur elle-même à intervalle régulier.

L'étape b) peut être suivie d'une étape c) d'usinage mécanique des surfaces externes 19 de l'ébauche 2. Les surfaces externes 19 de l'ébauche 2 correspondent aux surfaces de l'ébauche 2 qui ne sont pas en vis-à-vis d'autres surfaces de l'ébauche 2. L'usinage de l'étape c) est réalisé de sorte que l'ébauche 2 présente les côtes désirées pour la pièce ferromagnétique à fabriquer et/ou de sorte que les surfaces externes 19 présentent un état de surface souhaité pour la pièce ferromagnétique à fabriquer.

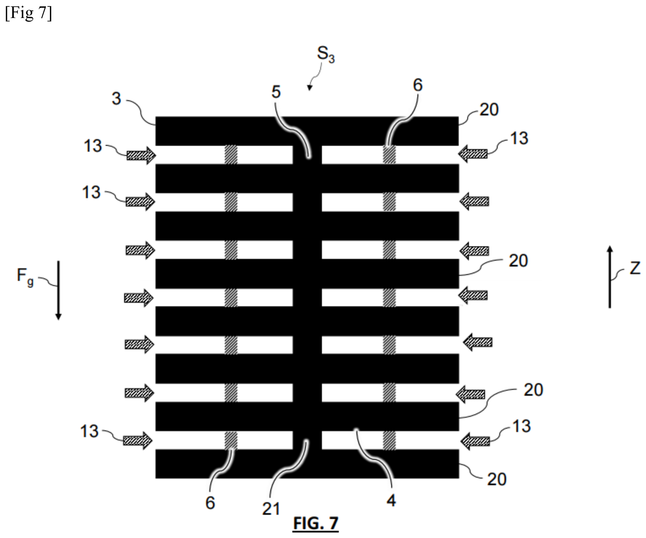

On a illustré à la figure 7 une section transversale S₃ d'un autre exemple d'ensemble intermédiaire 1 tel qu'obtenu à l'issue de l'étape a). Ledit ensemble intermédiaire 1 diffère de celui illustré aux figures 2 à 5 en ce que la paroi 3 présente la forme d'une grille, lorsqu'observée selon une coupe transversale de l'ensemble intermédiaire 1. L'ensemble intermédiaire 1 est monolithique et est formé d'un même matériau ferromagnétique.

La grille est constituée d'une ligne principale et d'une pluralité de lignes secondaires, chaque ligne secondaire étant une ramification de la ligne principale s'étendant en vis-à-vis d'une autre ligne secondaire. Chaque partie de la paroi 3 suivant une ligne secondaire est dénommée barreau 20. La partie de la paroi 3 suivant la ligne principale est dénommée colonne 21. Ainsi, la grille comprend des barreaux 20, s'étendant en vis-à-vis, notamment parallèlement, les uns aux autres, et une colonne 21 reliant les barreaux 20 entre eux. Les barreaux 20 forment les parties en surplomb 4 de l'ébauche 2 et la colonne 21 forme les parties en aplomb 5 de l'ébauche.

Pour chaque barreau 20 comprenant une partie en surplomb, l'ensemble intermédiaire 1 comprend au moins un support 6 reliant la surface inférieure dudit barreau 20 à la surface supérieure du barreau 20 adjacent. Les supports 6 soutiennent ainsi les parties en surplomb 4 lors de l'étape a) de fabrication additive. L'élimination des supports 6 durant l'étape b) peut être réalisée similairement à ce qui a été décrit précédemment.

D'autres variantes et améliorations peuvent être envisagées sans pour autant sortir du cadre de l'invention tel que défini par les revendications ci-après.

## Revendications

1. Procédé de fabrication d'une pièce ferromagnétique, comprenant les étapes successives suivantes :
a) fabrication additive d'un ensemble intermédiaire (1) en un matériau ferromagnétique comprenant une ébauche (2) de la pièce ferromagnétique et au moins un support (6), l'ébauche comprenant au moins une partie en surplomb (4) supportée par le au moins un support, l'ébauche comprenant une paroi (3) monolithique formant la ou les parties en surplomb, la paroi ayant la forme d'une grille, lorsqu'observée selon une coupe transversale de l'ensemble intermédiaire, la grille étant constituée d'une ligne principale et d'une pluralité de lignes secondaires, chaque ligne secondaire étant une ramification de la ligne principale s'étendant en vis-à-vis d'une autre ligne secondaire, les lignes secondaires étant éloignées les unes des autres de sorte que, pour chaque ligne secondaire, la partie de la paroi suivant ladite ligne secondaire est espacée des parties de la paroi suivant les autres lignes secondaires,
b) élimination de chaque support par dissolution chimique.

2. Procédé de fabrication d'une pièce ferromagnétique, comprenant les étapes successives suivantes :
a) fabrication additive d'un ensemble intermédiaire (1) en un matériau ferromagnétique comprenant une ébauche (2) de la pièce ferromagnétique et au moins un support (6), l'ébauche comprenant au moins une partie en surplomb (4) supportée par le au moins un support, l'ébauche comprenant une paroi (3) monolithique formant la ou les parties en surplomb, la paroi ayant une forme repliée sur elle-même de sorte que la paroi suit une ligne continue, lorsqu'observée selon une coupe transversale de l'ensemble intermédiaire, chaque surface (11₁) de la paroi en vis-à-vis d'une autre surface (11₂) de la paroi étant espacée de ladite autre surface, de préférence la distance entre lesdites surfaces étant inférieure à 250 µm,
b) élimination de chaque support par dissolution chimique.

3. Procédé selon la revendication précédente, la ligne continue étant une courbe de remplissage de l'espace d'ordre supérieur ou égal à 2, de préférence la courbe de remplissage de l'espace étant une courbe de Peano ou une courbe de Hilbert.

4. Procédé selon l'une des revendications précédentes, la différence entre l'épaisseur (E) de la paroi à l'issue de l'étape a) et l'épaisseur de la paroi à l'issue de l'étape b) étant comprise entre 50 et 150 µm, et/ou la paroi ayant une épaisseur (E) comprise entre 110 et 2000 µm à l'issue de l'étape a).

5. Procédé selon l'une quelconque des revendications précédentes, la partie en surplomb étant supportée par une pluralité de supports espacés les uns des autres, de préférence la distance entre deux supports adjacents étant comprise entre 100 et 5000 µm.

6. Procédé selon l'une quelconque des revendications précédentes, le support ayant, à l'issue de l'étape a), une forme cylindrique, de préférence de diamètre compris entre 50 et 200 µm, ou la forme d'un parallélépipède allongé, de préférence d'épaisseur comprise entre 50 et 200 µm et/ou de longueur comprise entre 500 et 10000 µm.

7. Procédé selon l'une quelconque des revendications précédentes, le support présentant, à l'issue de l'étape a), une hauteur, mesurée selon la direction de la force gravitationnelle durant l'étape a), comprise entre 100 et 500 µm.

8. Procédé selon l'une quelconque des revendications précédentes, le matériau ferromagnétique étant du fer ou un alliage comprenant du fer et au moins un élément choisi parmi le silicium, le cobalt et le nickel.

9. Procédé selon l'une quelconque des revendications précédentes, l'ensemble intermédiaire ayant une forme générale torique ou parallélépipédique.

10. Procédé selon l'une quelconque des revendications précédentes, la fabrication additive de l'étape a) mettant en œuvre une méthode de fusion sur lit de poudre, par exemple de fusion par laser ou par faisceau d'électrons sur lit de poudre, ou une méthode de dépôt de matière sous énergie concentrée, en particulier le dépôt de matière fondue par laser.

11. Procédé selon l'une quelconque des revendications précédentes, l'étape b) comprenant une sous-étape b₁) d'immersion de l'ensemble intermédiaire dans un bain d'agent dissolvant et/ou de mise en circulation d'un agent dissolvant dans des interstices (12) compris par l'ensemble intermédiaire, de préférence la sous-étape b₁) durant entre 0,5 et 5 min, de préférence le bain et/ou l'agent dissolvant mis en circulation étant à une température comprise entre 20 et 100 °C, de préférence le débit de circulation de l'agent dissolvant dans lesdits interstices étant compris entre 0,1 et 10 mL/min.

12. Procédé selon la revendication précédente, l'agent dissolvant du bain et/ou de la mise en circulation comprenant un acide choisi parmi l'acide nitrique, l'acide chlorhydrique ou l'acide sulfurique, de préférence l'agent dissolvant comprenant un solvant choisi parmi l'alcool éthylique ou l'eau, de préférence l'acide représentant entre 1 et 5 % en volume de l'agent dissolvant.

13. Procédé selon la revendication 11 ou 12, l'étape b) comprenant une sous-étape b₂), ultérieure à la sous-étape b₁), de rinçage de l'ébauche, de préférence par immersion dans une eau désionisée et/ou par mise en circulation d'une eau désionisée dans les interstices (12) de l'ensemble intermédiaire, de préférence l'eau désionisée étant à une température comprise entre 10 et 30 °C, de préférence la sous-étape b₂) durant entre 5 et 30 min, de préférence l'étape b) comprenant une sous-étape b₃), ultérieure à la sous-étape b₂), de séchage de l'ébauche, de préférence l'ébauche étant suspendue, de préférence l'ébauche étant mise en rotation sur elle-même à intervalle régulier, de préférence la sous-étape b₃) durant au moins 1 h.

14. Procédé selon l'une quelconque des revendication précédentes, l'étape b) étant suivie d'une étape c) d'usinage mécanique des surfaces externes (19) de l'ébauche.

15. Pièce ferromagnétique obtenue à partir du procédé selon l'une quelconque des revendications précédentes, les arrêtes de la paroi (3) de la pièce étant arrondies.
